(19)

**Europäisches Patentamt**

**European Patent Office**

**Office européen des brevets**

(11) **EP 4 570 496 A1**

(12) **EUROPEAN PATENT APPLICATION**

(43) Date of publication:
18.06.2025 Bulletin 2025/25

(21) Application number: 24211544.2

(22) Date of filing: 07.11.2024

(51) International Patent Classification (IPC):
B32B 25/16 (2006.01)        B32B 27/08 (2006.01)
B32B 27/18 (2006.01)        B32B 27/20 (2006.01)
B32B 27/22 (2006.01)        B32B 27/30 (2006.01)
B32B 27/32 (2006.01)        C08J 5/18 (2006.01)
C08L 23/04 (2006.01)

(52) Cooperative Patent Classification (CPC):
(C-Sets available)
B32B 27/08; B32B 25/16; B32B 27/18;
B32B 27/205; B32B 27/22; B32B 27/30;
B32B 27/32; C08F 255/02; C08L 23/04;
C08L 51/06; B32B 2250/03; B32B 2250/24;
B32B 2250/242; B32B 2264/00; B32B 2264/02;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.12.2023   CN 202311725243**

(71) Applicant: **Henan Daxinyuan New Material Co., Ltd.**
**Xinxiang City Henan (CN)**

(72) Inventors:
• **ZHANG, QIGANG**
**Henan (CN)**
• **LI, YUANHONG**
**Henan (CN)**

• **YAN, YINFENG**
**Henan (CN)**
• **WU, QI**
**Henan (CN)**
• **SHEN, PENG**
**Henan (CN)**
• **LI, GUOQING**
**Henan (CN)**
• **CAI, WENBIN**
**Henan (CN)**
• **WANG, WEIWEI**
**Henan (CN)**
• **FAN, PENGPENG**
**Henan (CN)**

(74) Representative: **Williams Powell**
**44 Prospect Place**
**Bromley, Kent BR2 9HN (GB)**

(54) **LOW-DENSITY HEAT-SHRINKABLE FILM FOR LABELS, PREPARATION METHOD AND USE THEREOF**

(57)     The invention provides a low-density heat-shrinkable film for labels, a preparation method and use thereof. The low-density heat-shrinkable film for labels includes a layer A, a layer B and a layer C, wherein the layer A is prepared by raw materials including a first opening agent, and at least one of a first polymer comprising a unit derived from a cyclic olefin and a first modified polystyrene, the layer B is prepared by raw materials including a second polymer comprising a unit derived from a cyclic olefin, a modified polypropylene, a polyethylene and a thickening agent, and the layer C is prepared by raw materials including a polyolefin, a second opening agent, and at least one of a third polymer comprising a unit derived from a cyclic olefin and a second modified polystyrene.

EP 4 570 496 A1

Processed by Luminess, 75001 PARIS (FR)

(52) Cooperative Patent Classification (CPC): (Cont.)
B32B 2264/10; B32B 2264/102; B32B 2264/12;
B32B 2272/00; B32B 2307/30; B32B 2307/40;
B32B 2307/406; B32B 2307/408; B32B 2307/412;
B32B 2307/514; B32B 2307/54; B32B 2307/736;
B32B 2307/7376; B32B 2519/00; B32B 2553/00;
B32B 2553/023; C08L 2203/16

C-Sets
**C08F 255/02, C08F 220/325;**
**C08F 255/02, C08F 222/06**

**Description**

**TECHNICAL FIELD**

The present invention belongs to the technical filed of shrinkable film preparation, and particularly relates to a low-density heat-shrinkable film for labels, a preparation method and use thereof.

**BACKGROUND ART**

Heat-shrinkable films are generally used as labels wrapping around containers, such as plastic bottles and glass bottles. Heat-shrinkable films have good gloss, fit and shrinkage, and the gloss and shrinkage of heat-shrinkable films make the packaging patterns on containers more vivid, which can highlight the image on supermarket shelves and has an unexpected container effect. Thus, the heat-shrinkable films are widely used in container packaging.

The existing materials of heat-shrinkable films for labels mainly include polyvinyl chloride (PVC), polyethylene terephthalteco-1,4-cyclohexylanedimethylene terephthalate) (PETG) and oriented polystyrene (OPS). PVC heat-shrinkable film has high tensile strength, high elongation, good self-adhesion and high transparency, but is unenvironmentally friendly due to the highly toxic dioxins produced during the recycling process thereof, and therefore, it is gradually banned from use. OPS heat-shrinkable film has high strength, high rigidity, stable shape, good gloss and transparency, is easy to process and color, further has good printing performance, extremely high printing resolution and is low in price. PETG heat-shrinkable film has non-toxicity, no smell, high strength, high heat shrinkage, good optical performance, mechanical extensibility and beautiful packaging effect. Therefore, on the basis of the above properties, the OPS heat-shrinkable film and PETG heat-shrinkable film are being used more and more widely. However, both PVC heat-shrinkable film and OPS heat-shrinkable film have a high density. In a recycling process, when containers with a density higher than water, such as polyethylene terephthalate (PET) bottles, and PETG heat-shrinkable film or OPS heat-shrinkable film are chopped for flotation with water as the flotation medium, the container materials, such as PET bottles, and PETG heat-shrinkable film or OPS heat-shrinkable film will sink into water. It is difficult to separate container materials with a density higher than water, such as PET bottles, from the PETG heat-shrinkable film and/or OPS heat-shrinkable film. If the PETG heat-shrinkable film and/or OPS heat-shrinkable film are introduced into container materials with a density higher than water, such as PET bottles, in a recycling process, the quality of container materials will be reduced, resulting in that the recycled container materials could no longer be used in the bottle blowing process, thus affecting the recycling of container materials with a density higher than water, such as PET bottles.

In order to facilitate the separation between the materials of containers with a density higher than water, such as PET bottles, and the heat-shrinkable film, in the prior art, the density of the PETG heat-shrinkable film is reduced by foaming. However, PETG has a slightly poor melt strength, which makes it difficult to stabilize the foamed micropores. Even if the foaming density is reduced below the water density indefinitely, the products obtained from foaming still have poor optical properties.

Further research shows that cycloolefin copolymer is an amorphous polymer with a low density, a good transparency and a high strength, and thus cycloolefin copolymer is used to prepare low-density heat-shrinkable films. However, when cycloolefin copolymer is used to prepared heat-shrinkable films with polyethylene or polypropylene, cycloolefin copolymer has a poor stretching film-forming property with polyethylene or polypropylene. Moreover, the prepared heat-shrinkable film has a shrinkage less than 50% (test condition: at 95°C for 10 s in a water bath), which makes it difficult for the prepared heat-shrinkable film to meet the shrinkage requirements of labels. A heat-shrinkable film with a density lower than 0.96 g/cm$^3$ could be prepared from the combination of cycloolefin copolymer, polypropylene and polyethylene. However, the prepared heat-shrinkable film still has disadvantages of a high haze and a poor transverse tensile property. When propylene monomer is grafted with maleic anhydride, a heat-shrinkable film with a low density and a low haze could be prepared by the combination of the grafted propylene monomer and cycloolefin copolymer, which still has disadvantages of a poor transverse tensile property.

In view of the problems existing in the heat-shrinkable film prepared from the combination of cycloolefin copolymer and polypropylene or the combination of cycloolefin copolymer and maleic anhydride grafted propylene monomer, it is an urgent problem to be solved in this present invention that how to prepare a new type of low-density heat-shrinkable film for labels, wherein the heat-shrinkable film not only has a density lower than water, but also has a low haze and a good transverse tensile property.

**SUMMARY**

An object of the present invention is to provide a low-density heat-shrinkable film for labels, a preparation method and use thereof, so as to solve the problems raised in the above background technology.

In order to achieve the above object, the present invention provides the following technical solutions.

At one aspect, the present invention provides a low-density heat-shrinkable film for labels, including a layer A, a layer B and a layer C, wherein the layer A is prepared by raw materials including a first opening agent, and at least one of a first polymer comprising a unit derived from a cyclic olefin and a first modified polystyrene, the layer B is prepared by raw materials including a second polymer comprising a unit derived from a cyclic olefin, a modified polypropylene, a polyethylene and a thickening agent, and the layer C is prepared by raw materials including a polyolefin, a second opening agent, and at least one of a third polymer comprising a unit derived from a cyclic olefin and a second modified polystyrene;

the first polymer comprising a unit derived from a cyclic olefin, second polymer comprising a unit derived from a cyclic olefin, and the third polymer comprising a unit derived from a cyclic olefin are each independently at least one selected from the group consisting of a cycloolefin copolymer (COC) and a cycloolefin polymer(COP);
the first modified polystyrene and the second modified polystyrene are a styrene-butadiene block copolymer;
the modified polypropylene is a compatibilizer grafted polypropylene;
the polyethylene is at least one selected from the group consisting of a low density polyethylene (LDPE) and a linear low density polyethylene (LLDPE), and
the polyolefin is at least one selected from the group consisting of a polyolefin elastomer (POE), a polyolefin plasticizer (POP), an ethylene-vinyl acetate copolymer (EVA) and an ethylene acrylic acid copolymer (EAA).

In some embodiments, a thickness ratio of the layer A, the layer B, and the layer C is in a range of 5-20: 60-90: 5-20.

In some embodiments, based on a total mass percentage of the raw materials of the layer B being 100%, the raw materials of the layer B includes 10-20% of the second polymer comprising a unit derived from a cyclic olefin, 60-80% of the modified polypropylene, 5-10% of the polyethylene and 5-10% of the thickening agent, by mass.

In some embodiments, based on a total mass percentage of the raw materials of the layer A being 100%, the raw materials of the layer A includes 94-99% of the at least one of the first polymer comprising a unit derived from a cyclic olefin and the first modified polystyrene, and 1-6% of the first opening agent, by mass.

In some embodiments, based on a total mass percentage of the raw materials of the layer C being 100%, the raw materials of the layer C includes 84-94% of the at least one of the third polymer comprising a unit derived from a cyclic olefin and the second modified polystyrene, 5-10% of the polyolefin, and 1-6% of the second opening agent, by mass.

In some embodiments, the modified polypropylene is at least one selected from the group consisting of a maleic anhydride grafted polypropylene and a glycidyl methacrylate grafted polypropylene, and a polypropylene for preparing the modified polypropylene is at least one selected from the group consisting of a binary copolymer polypropylene and a ternary copolymer polypropylene.

In some embodiments, the thickening agent is at least one selected from the group consisting of a C5 petroleum resin and a C9 petroleum resin.

At another aspect, the present invention further provides a method for preparing the low-density heat-shrinkable film for labels, including the following steps:

(1) mixing the raw materials of the layer A including the first opening agent and the at least one of the first polymer comprising a unit derived from a cyclic olefin and the first modified polystyrene to obtain a mixed raw material of layer A,
(2) mixing the raw materials of the layer B including the second polymer comprising a unit derived from a cyclic olefin, the modified polypropylene, the polyethylene and the thickening agent to obtain a mixed raw material of layer B,
(3) mixing the raw materials of the layer C including the polyolefin compound, the second opening ageng and the at least one of the third polymer comprising a unit derived from a cyclic olefin and the second modified polystyrene to obtain a mixed raw material of layer C,
(4) subjecting the mixed raw material of layer A, the mixed raw material of layer B, and the mixed raw material of layer C to melting separately, co-extruding and casting to obtain a cast film, wherein during the casting, the cast film is adhered to a cooling roll by an air knife, and
(5) sequentially subjecting the cast film obtained in step (4) to longitudinal stretching, transverse stretching and corona treatment to obtain the low-density heat-shrinkable film for labels.

In some embodiments, in step (5), the longitudinal stretching is performed at a first preheating temperature of 100-150°C, a first stretching temperature of 80-120°C and a first stabilization temperature of 50-90°C, the transverse stretching is performed at a second preheating temperature of 120-170°C, a second stretching temperature of 80-120°C, and a second stabilization temperature of 50-90°C, and the corona treatment is performed at a power of 28-32 Wmin/m.

At another aspect, the present invention also provides use of the low-density heat-shrinkable film for labels as a packaging film.

Compared with the prior art, the present invention has the following beneficial effects: the heat-shrinkable film prepared according to the present invention not only has a density lower than 0.96 g/cm$^3$, but also has a relatively low haze and a relatively high transverse shrinkage, and the three layers are well bonded with each other. Due to the relatively low density, it is possible to easily separate the heat-shrinkable film and containers having a density higher than water, such as PET bottles. Furthermore, the prepared heat-shrinkable film has a relatively low haze, and a relatively high transverse shrinkage, and is medium soft and hart, which meet the actual production requirements for heat-shrinkable films.

## DETAILED DESCRIPTION OF THE EMBODIMENTS

The present invention will be described below with reference to specific embodiments. It should be noted that the following embodiments are exemplary embodiments of the present invention, which are only used to illustrate the present invention, rather than limiting the present invention. Other combinations and various improvements within the inventive concept of the present invention could be made without departing from the spirit or scope of the present invention.

At one aspect, the present invention provides a low-density heat-shrinkable film for labels, including a layer A, a layer B, and a layer C, wherein the layer A is prepared by raw materials including a first opening agent, and at least one of a first polymer comprising a unit derived from a cyclic olefin and a first modified polystyrene, the layer B is prepared by raw materials including a second polymer comprising a unit derived from a cyclic olefin, a modified polypropylene, a polyethylene and a thickening agent, and the layer C is prepared by raw materials including a polyolefin, a second opening agent, and at least one of a third polymer comprising a unit derived from a cyclic olefin and a second modified polystyrene;

the first polymer comprising a unit derived from a cyclic olefin, second polymer comprising a unit derived from a cyclic olefin, and the third polymer comprising a unit derived from a cyclic olefin are each independently at least one selected from the group consisting of a cycloolefin copolymer (COC) and a cycloolefin polymer(COP);
the first modified polystyrene and the second modified polystyrene are a styrene-butadiene block copolymer;
the modified polypropylene is a compatibilizer grafted polypropylene;
the polyethylene is at least one selected from the group consisting of a low density polyethylene (LDPE, also named branched low density polyethylene) and a linear low density polyethylene (LLDPE, which is a copolymer of ethylene and an $\alpha$-olefin); and
the polyolefin is at least one selected from the group consisting of a polyolefin elastomer (POE), a polyolefin plasticizer (POP), an ethylene-vinyl acetate copolymer (EVA) and an ethylene acrylic acid copolymer (EAA).

In the present invention, the layer A after corona treatment could be provided as a surface layer for printing, and the first polymer comprising a unit derived from a cyclic olefin included in the raw materials of the layer A could improve the stiffness and shrinkage of low-density heat-shrinkable film.

In the present invention, the thickening agent in the layer B could improve the stiffness of the low-density shrinkable film. The layer C, as a high gloss layer, could improve the high brightness effect of the printed color. For the raw materials of the layer C, the at least one of the third polymer comprising a unit derived from a cyclic olefin and the second modified polystyrene could improve the stiffness and shrinkage of the low-density heat-shrinkable film, and the polyolefin can improve the stretching film-forming effect. The layer A is relatively thin, and could be stretched together with the layer B and layer C to form a film, without additional polyolefin.

In the present invention, the layer B is a polar connecting layer, which acts as a bridge to connect the upper and lower layers (the layer A and layer C), thus avoiding delamination. the maleic anhydride grafted polypropylene or glycidyl methacrylate grafted polypropylene in the raw materials of the layer B could reduce the density of the heat-shrinkable film and adjust the shrinkage curve to avoid being too steep. The polyethylene in the layer B could improve the stretching effect of the stretched core layer (the layer B) material, and the core layer cannot use polyolefin, because the compatibility between the polyolefin and polypropylene is not good.

In the present invention, in order to avoid the inconsistent shrinkage of the modified polypropylene in the layer B and the first polymer comprising a unit derived from a cyclic olefin in the layer A, and the problem of flow lines caused by the difference of melt index of the modified polypropylene and the second polymer comprising a unit derived from a cyclic olefin in the processing process, the second polymer comprising a unit derived from a cyclic olefin is added in the layer B, so as to adjust the shrinkage performance of the layer B and avoid the problems of inconsistent shrinkage and flow lines.

In the application, there is no special requirement for the raw materials of layer A, layer B, and layer C. In the example, the first polymer comprising a unit derived from a cyclic olefin, second polymer comprising a unit derived from a cyclic olefin, and the third polymer comprising a unit derived from a cyclic olefin each independently have a melt index of 1-2 g/10 min at 190°C; the first modified polystyrene and the second modified polystyrene each independently have a melt index of 5-10 g/10 min at 190°C; the modified polypropylene has a melt index of 3-8 g/10 min at 190°C; the polyethylene has a melt index of 1-8 g/10 min at 190°C; and the polyolefin has a melt index of 0.5-10 g/10 min at 190°C.

In some embodiments, a thickness ratio of the layer A, the layer B, and the layer C is in a range of 5-20: 60-90:

5-20.

In some embodiments, based on a total mass percentage of the raw materials of the layer B being 100%, the raw materials of the layer B includes 10-20% of the second polymer comprising a unit derived from a cyclic olefin, 60-80% of the modified polypropylene, 5-10% of the polyethylene and 5-10% of the thickening agent, by mass.

In some embodiments, based on a total mass percentage of the raw materials of the layer A being 100%, the raw materials of the layer A includes 94-99% of the at least one of the first polymer comprising a unit derived from a cyclic olefin and the first modified polystyrene, and 1-6% of the first opening agent, by mass.

In some embodiments, based on a total mass percentage of the raw materials of the layer C being 100%, the raw materials of layer C includes 84-94% of the at least one of the third polymer comprising a unit derived from a cyclic olefin and the second modified polystyrene, 5-10% of the polyolefin, and 1-6% of the second opening agent, by mass.

In some embodiments, the first opening agent and the second opening agent are each independently at least one selected from the group consisting of an organic opening agent and an inorganic opening agent.

In some embodiments, the organic opening agent is at least one selected from the group consisting of oleamide, octadecanamide and erucamide.

In some embodiments, the inorganic opening agent is at least one selected from the group consisting of nano-silica, talcum powder and diatomaceous earth.

In some embodiments, the modified polypropylene is at least one selected from the group consisting of a maleic anhydride grafted polypropylene and a glycidyl methacrylate grafted polypropylene, and a polypropylene for preparing the modified polypropylene is at least one selected from the group consisting of a binary copolymer polypropylene and a ternary copolymer polypropylene.

In some embodiments, the thickening agent is at least one selected from the group consisting of a C5 petroleum resin and a C9 petroleum resin.

At another aspect, the present invention further provides a method for preparing the low-density heat-shrinkable film for labels, including the following steps:

(1) mixing the raw materials of the layer A including the first opening agent and the at least one of the first polymer comprising a unit derived from a cyclic olefin and the first modified polystyrene to obtain a mixed raw material of layer A,
(2) mixing the raw materials of the layer B including the second polymer comprising a unit derived from a cyclic olefin, the modified polypropylene, the polyethylene and the thickening agent to obtain a mixed raw material of layer B,
(3) mixing the raw materials of the layer C including the polyolefin, the second opening agent and the at least one of the third polymer comprising a unit derived from a cyclic olefin and the second modified polystyrene to obtain a mixed raw material of layer C,
(4) subjecting the mixed raw material of layer A, the mixed raw material of layer B, and the mixed raw material of layer C to melting separately, co-extruding and casting to obtain a cast film, wherein during the casting, the cast film is adhered to a cooling roll by an air knife, and
(5) sequentially subjecting the cast film obtained in step (4) to longitudinal stretching, transverse stretching and corona treatment to obtain the low-density heat-shrinkable film for labels.

In some embodiments, the co-extruding in step (4) is performed by an extruder at a processing temperature of 200-250°C and a die temperature of 220-260°C.

In some embodiments, the longitudinal stretching in step (5) is performed at a first preheating temperature of 100-150°C, a first stretching temperature of 80-120°C, and a first stabilization temperature of 50-90°C.

In some embodiments, the transverse stretching in step (5) is performed at a second preheating temperature of 120-170°C, a second stretching temperature of 80-120°C, and a second stabilization temperature of 50-90°C.

In some embodiments, the corona treatment in step (5) is performed at a power of 28-32 Wmin/m.

In some embodiments, the cast film is adhered to the cooling roll by an air knife with natural wind.

Compared with electrostatic adhesion between a cast film of polyglycol terephthalate lipid-1, 4-cyclohexanedimethanol and a cooling roll, due to the weak polarity of materials such as cycloolefin copolymer, maleic anhydride grafted polypropylene or glycidyl methacrylate grafted polypropylene, polyethylene, thickening resin and polyolefin, the air knife adhesion in the present invention can reduce the haze of the heat-shrinkable film and improve the transverse shrinkage of the heat-shrinkable film.

In some embodiments, to ensure the cooling effect of the casting, a water tank is provided under the knife for auxiliary cooling.

In some embodiments, in step (5) the cast film is longitudinally stretched for 1.1 -1.2 times, and transversely stretched for 4.5-5 times, preferably 4.8-5 times.

At another aspect, the present invention further provides use of the low-density heat-shrinkable film for labels as a packaging film, wherein the layer A of the low-density heat-shrinkable film for labels after the corona treatment serves as a printing layer.

In the following examples, except for maleic anhydride grafted polypropylene -1, maleic anhydride grafted polypropylene -2, glycidyl methacrylate grafted polypropylene -1 and glycidyl methacrylate grafted polypropylene -2, the other used compound monomers and related agents are commercially available. Among them, PETG-1 was purchased from Henan Yuanhong Polymer New Materials Co., Ltd., China, with a brand number of YH101; binary copolymer polypropylene -1 had a melt index of 3-8 g/10 min at 190°C and was purchased from Dushanzi Petrochemical Company, Xinjiang, China, with a brand number of EPPO723; binary copolymer polypropylene -2 had a melt index of 3-8 g/10 min at 190°C and was purchased from COSMOPLENE with a brand number of FC9411G; ternary copolymer polypropylene -1 had a melt index of 3-8 g/10 min at 190°C and was purchased from Dushanzi Petrochemical Company, Xinjiang, China, with a brand number of TF1007; ternary copolymer polypropylene -2 had a melt index of 3-8 g/10 min at 190°C and was purchased from Shanghai Petrochemical Company, China, with a brand number of F800EPS; COC had a melt index of 1-2 g/10 min at 190°C and was purchased from Polyplastics Co., Ltd., Japan, with a brand number of 8007F; nano-silica was purchased from Shanghai Sukano, China; talcum powder was purchased from Wuhan Hengyuanxin Chemical Co., Ltd., China; POP resin had a melt index of 1-5 g/10 min at 190°C and was purchased from Saudi Basic Industries Company; LLDPE had a melt index of 1-8 g/10 min at 190°C and was purchased from Beijing Institute of Chemical Technology, China; C5 petroleum resin and C9 petroleum resin were purchased from Exxon Mobil Chemical Company; modified polystyrene had a melt index of 1-2 g/10 min at 190°C and was purchased from INEOS Styrolution; COP had a melt index of 5-10 g/10 min at 190°C and was purchased from Zeon Corporation, Japan; LDPE had a melt index of 1-8 g/10 at 190°C min and was purchased from Wuhan Petrochemical Company, China; POE had a melt index of 0.5-10 g/10 min at 190°C and was purchased from Chambroad Petrochemicals Ltd., Shandong, China; EAA had a melt index of 5-10 g/10 min at 190°C and was purchased from Exxon Mobil Chemical Company.

The maleic anhydride grafted polypropylene -1 was prepared by a method performed as follows:

500 g of binary copolymer polypropylene -1 and 10 g of maleic anhydride were mixed to be uniform to obtain a mixture, and the mixture was extruded and granulated through a twin-screw extruder with a first-stage temperature of 150°C, a second-stage temperature to an eighth-stage temperature of 190°C, a rotating speed of a main screw of 180 r/min, and a rotating speed of a feeding screw of 18 r/min.

The maleic anhydride grafted polypropylene -2 was prepared according to the preparation method of the maleic anhydride grafted polypropylene -1, except that "500 g of binary copolymer polypropylene -1 and 10 g of maleic anhydride" was substituted by "500 g of ternary copolymer polypropylene -1 and 15 g of maleic anhydride".

The glycidyl methacrylate grafted polypropylene -1 was prepared according to the preparation method of the maleic anhydride grafted polypropylene -1, except that "500 g of binary copolymer polypropylene -1" was substituted by "500 g of binary copolymer polypropylene -2".

The glycidyl methacrylate grafted polypropylene -2 was prepared according to the preparation method of the maleic anhydride grafted polypropylene -1, except that "500 g of binary copolymer polypropylene -1 and 10 g of maleic anhydride" was replaced by "500 g of ternary copolymer polypropylene -2 and 20 g of maleic anhydride".

The maleic anhydride grafted propylene monomer was prepared according to the preparation method of the maleic anhydride grafted polypropylene -1, except that "500 g of binary copolymer polypropylene -1 and 10 g of maleic anhydride" was substituted by "500 g of propylene monomer and 10 g of maleic anhydride".

Low-density heat-shrinkable films for labels 1 to 13 were prepared by a method consisting of the following steps:

(1) the raw materials of a layer A including a first opening agent and at least one of a first polymer comprising a unit derived from a cyclic olefin and a first modified polystyrene were mixed to obtain a mixed raw material of layer A,
(2) the raw materials of a layer B including a second polymer comprising a unit derived from a cyclic olefin, a modified polypropylene, a polyethylene and the thickening agent were mixed to obtain a mixed raw material of layer B,
(3) the raw materials of a layer C including a polyolefin, a second opening ageng and at least one of the third polymer comprising a unit derived from a cyclic olefin and the second modified polystyrene were mixed to obtain a mixed raw material of layer C,
(4) the mixed raw material of layer A, the mixed raw material of layer B, and the mixed raw material of layer C were subjected to melting separately, co-extruding and casting to obtain a cast film;
(5) the cast film obtained in step (4) was sequentially subjected to longitudinal stretching, transverse stretching and corona treatment to obtain the low-density heat-shrinkable film for labels.

Among them, in the method for preparing the low-density heat-shrinkable film for labels 1 and 5-13, step (4) was performed by an extruder at a processing temperature of 220°C, and a die temperature of 240°C; in step (5), the longitudinal stretching was performed at a first preheating temperature of 120°C, a first stretching temperature of 100°C, and a first stabilization temperature of 70°C, the transverse stretching was performed at a second preheating temperature of 140°C, a second stretching temperature of 90°C, and a second stabilization temperature of 60°C, the cast film was longitudinally stretched for 1.1 times, and transversely stretched for 4.9 times; the corona treatment was performed at a powder of 30Wmin/m.

Among them, in the method for preparing the low-density heat-shrinkable film for labels 2, step (4) was performed by an extruder at a processing temperature of 210°C, and a die temperature of 230°C; in step (5), the longitudinal stretching was performed at a first preheating temperature of 100°C, a first stretching temperature of 85°C, and a first stabilization temperature of 50°C, the transverse stretching was performed at a second preheating temperature of 120°C, a second stretching temperature of 90°C, and a second stabilization temperature of 60°C, the cast film was longitudinally stretched for 1.2 times, and transversely stretched for 4.8 times; the corona treatment was performed at a powder of 30Wmin/m.

Among them, in the method for preparing the low-density heat-shrinkable film for labels 3, step (4) was performed by an extruder at a processing temperature of 200°C, and a die temperature of 230°C; in step (5), the longitudinal stretching was performed at a first preheating temperature of 150°C, a first stretching temperature of 120°C, and a first stabilization temperature of 85°C, the transverse stretching was performed at a second preheating temperature of 170°C, a second stretching temperature of 120°C, and a second stabilization temperature of 90°C, the cast film was longitudinally stretched for 1.2 times, and transversely stretched for 5 times; the corona treatment was performed at a powder of 30Wmin/m.

Among them, in the method for preparing the low-density heat-shrinkable film for labels 4, step (4) was performed by an extruder at a processing temperature of 250°C, and a die temperature of 260°C; in step (5), the longitudinal stretching was performed at a first preheating temperature of 140°C, a first stretching temperature of 110°C, and a first stabilization temperature of 90°C, the transverse stretching was performed at a second preheating temperature of 170°C, a second stretching temperature of 115°C, and a second stabilization temperature of 90°C, the cast film was longitudinally stretched for 1.2 times, and transversely stretched for 4.8 times; the corona treatment was performed at a powder of 30Wmin/m.

Among them, in the methods for preparing the low-density heat-shrinkable films for labels 1-8, 10-11, and 13, during the casting, the cast film is adhered to a cooling roll by an air knife using natural wind.

In the methods for preparing the low-density heat-shrinkable films for labels 9 and 12, during the casting, the cast film is adhered to a cooling roll by static electricity.

The components and content of each component used in the low-density heat-shrinkable films for labels 1-13 are shown in Tables 1-4:

Table 1

| Components (%) | | Low-density heat-shrinkab le film for labels 1 | Low-density heat-shrinkab le film for labels 2 | Low-density heat-shrinkab le film for labels 3 | Low-density heat-shrinkab le film for labels 4 |
|---|---|---|---|---|---|
| Raw materia ls of layer A | COC | 99 | / | / | / |
| | POP | / | / | 97 | / |
| | Nona-silica | 1 | / | 2 | 3 |
| | Modified polystyrene | / | 96 | / | 94 |
| | Talcum powder | / | 4 | / | / |
| | Oleamide | / | / | 1 | / |
| | Octadecana mide | / | / | / | 3 |
| Raw materia ls of layerB | Maleic anhydride grafted polypropylene -1 | 70 | / | / | / |
| | Maleic anhydride grafted polypropylene -2 | / | 72 | 34 | / |
| | Glycidyl methacry-late grafted | / | / | 39 | / |

(continued)

| Components (%) | | Low-density heat-shrinkab le film for labels 1 | Low-density heat-shrinkab le film for labels 2 | Low-density heat-shrinkab le film for labels 3 | Low-density heat-shrinkab le film for labels 4 |
|---|---|---|---|---|---|
| | polypropylene -1 | | | | |
| | Glycidyl methacry-late grafted poly-propylene -2 | / | / | / | 70 |
| | LLDPE | 5 | 7 | 10 | 10 |
| | LDPE | 20 | 15 | 11 | 12 |
| | C5 petroleum resin | 5 | / | 6 | 8 |
| | C9 petroleum resin | / | 6 | / | / |
| Raw materia ls of layer C | COC | 85 | 91 | / | 86 |
| | Modified polystyrene | / | / | 88 | / |
| | POP | 10 | / | / | 8 |
| | POE | / | 6 | / | / |
| | EAA | / | / | 7 | / |
| | Nano-silica | 5 | / | / | / |
| | Talcum powder | / | 3 | / | 6 |
| | Oleamide | / | / | 5 | / |
| A thickness ratio of layer A, layer B, and layer C | | 20:60:20 | 10:80:10 | 15:70:15 | 18:64:18 |

Table 2

| Components (%) | | Low-density heat-shrinkab le film for labels 5 | Low-density heat-shrinkab le film for labels 6 | Low-density heat-shrinkab le film for labels 7 | Low-density heat-shrinkab le film for labels 8 |
|---|---|---|---|---|---|
| Raw materia ls of layer A | COC | 99 | 99 | 99 | 99 |
| | Nano-silica | 1 | 1 | 1 | 1 |
| Raw materia ls of layer B | Maleic anhydride grafted polypropylene -1 | 85 | 55 | 70 | 70 |
| | LLDPE | 2 | 10 | 5 | 5 |
| | COC | 10 | 25 | 20 | 20 |
| | C5 petroleum resin | 3 | 10 | 5 | 5 |
| Raw materia ls of layer C | COC | 85 | 85 | 85 | 85 |
| | POP | 10 | 10 | 10 | 10 |
| | Nano-silica | 5 | 5 | 5 | 5 |
| A thickness ratio of layer A, layer B, and layer C | | 20:60:20 | 20:60:20 | 3:94:3 | 30:40:30 |

Table 3

| Components (%) | | Low-densi ty heat-shrin kable film for labels 9 | Low-densi ty heat-shrin kable film for labels 10 | Low-densi ty heat-shrin kable film for labels 11 | Low-densi ty heat-shrin kable film for labels 12 |
|---|---|---|---|---|---|
| Raw materi als of layer A | COC | 99 | 99 | 99 | 99 |
| | Nano-silica | 1 | 1 | 1 | 1 |
| Raw materi als of layer B | Maleic anhydride grafted polypropylene-1 | 70 | / | 90 | / |
| | Binary copolymer polypropylene-1 | / | 70 | / | / |
| | PETG-1 | / | / | / | 90 |
| | LLDPE | 5 | 5 | 5 | 5 |
| | COC | 20 | 20 | / | / |
| | C5 petroleum resin | 5 | 5 | 5 | 5 |
| Raw materi als of layer C | COC | 85 | 85 | 85 | 85 |
| | POP | 10 | 10 | 10 | 10 |
| | Nano-silica | 5 | 5 | 5 | 5 |
| A thickness ratio of layer A, layer B, and layer C | | 20:60:20 | 20:60:20 | 20:60:20 | 20:60:20 |

Table 4

| Components (%) | | Low-density heat-shrinkable film for labels 13 |
|---|---|---|
| Raw materials of layer A | COC | 99 |
| | Nano-silica | 1 |
| Raw materials of layer B | Maleic anhydride grafted propylene monomer | 70 |
| | LLDPE | 5 |
| | COC | 20 |
| | C5 petroleum resin | 5 |
| Raw materials of layer C | COC | 85 |
| | POP | 10 |
| | Nano-silica | 5 |
| A thickness ratio of layer A, layer B, and layer C | | 20:60:20 |

The low-density heat-shrinkable films for labels 1-13 were tested for haze, transverse shrinkage and density. The low-density heat-shrinkable films for labels 1-13 with a size of 5 cm * 3 cm * 0.003 cm were subjected to the test. The specific test methods are as follows:

Haze test standard: ASTMD1003.

Test standard of transverse shrinkage: ASTM D1204 (tested at a temperature of 90°C for 10 seconds).

Density = weight/volume (tested at a temperature of 25°C).

The test results are shown in Table 5, wherein Examples 1-8 correspond to the low-density heat-shrinkable films for labels 1-8, and Comparative Examples 1-5 correspond to the low-density heat-shrinkable films for labels 9-13.

Table 5

| Test items | Haze (%) | Transverse shrinkage (%) | Density (g/cm$^3$) |
|---|---|---|---|
| Example 1 | 4.4 | 67 | 0.94 |
| Example 2 | 4.1 | 63 | 0.92 |
| Example 3 | 4.1 | 62 | 0.93 |
| Example 4 | 4.1 | 64 | 0.94 |
| Example 5 | 3.3 | 45 | 0.936 |
| Example 6 | 4.9 | 66 | 0.96 |
| Example 7 | 4.5 | 55 | 0.915 |
| Example 8 | 4.4 | 65 | 0.96 |
| Comparative Example 1 | 11 | 33 | 0.94 |
| Comparative Example 2 | 5.0 | 22 | 0.97 |
| Comparative Example 3 | 1.0 | 18 | 0.91 |
| Comparative Example 4 | 4.5 | 76 | 1.32 |
| Comparative Example 5 | 4.4 | 18% | 0.97 |

From the comparison of Example 1 and Comparative Example 1, it can be seen that when the electrostatic adhesion between the cast film and the cooling roll during casting in step (4) is substituted by air knife adhesion, the prepared heat-shrinkable film with a low density has a significantly reduced haze and a significantly improved transverse shrinkage.

From the comparison of Example 1 and Comparative Example 2, it can be seen that when the binary copolymer polypropylene-1 in the raw materials of the layer B is substituted by maleic anhydride grafted polypropylene -1, in addition to a density lower than 1 g/cm$^3$, the prepared heat-shrinkable film has a further reduced haze, a further reduced density, and a further improved transverse shrinkage.

From the comparison of Example 1 and Comparative Example 3, it can be seen that when raw materials of the layer B include no cycloolefin copolymer, the prepared heat-shrinkable film has a relatively low haze and a relatively low density, but it has a relatively low transverse shrinkage, which does not meet the actual production requirements of heat-shrinkable films.

From the comparison of Example 1 and Comparative Example 4, it can be seen that the low-density heat-shrinkable film for labels, prepared from raw materials of the layer A and raw materials of the layer B provided by the present invention, not only has a relatively low haze and a relatively high transverse shrinkage, but also has a density lower than 0.96 g/cm$^3$. Due to the low density of the heat-shrinkable film, the heat-shrinkable film and materials of containers having a density greater than water, such as PET bottles, could be easily separated. Moreover, the heat-shrinkable film prepared according to Example 1 is medium soft and hard, which meets the actual production requirements.

From the comparison of Example 1 and Comparative Example 5, it can be seen that when the maleic anhydride grafted propylene monomer in raw materials of layer B is substituted by maleic anhydride grafted polypropylene-1, in addition to a density lower than 0.96 g/cm$^3$ and a relatively low haze, the heat-shrinkable film further has an improved transverse shrinkage.

From the comparison of Example 1 and Examples 5-6, it can be seen that with an appropriate mass ratio of the second polymer comprising a unit derived from a cyclic olefin, the modified polypropylene, the polyethylene, and the thickening agent in raw materials of the layer B, the prepared heat-shrinkable film has a relatively low haze, a relatively low density, and a relatively good transverse shrinkage. Compared with the heat-shrinkable film prepared according to Example 5, the heat-shrinkable film prepared according to Example 1 has a higher longitudinal shrinkage. Compared with the heat-shrinkable film prepared according to Example 6, the heat-shrinkable film prepared according to Example 1 has a lower haze and a lower density.

From the comparison of Example 1 and Examples 7-8, it can be seen that when the thickness ratio of layer A, layer B, and layer C falls with an appropriate range, the prepared heat-shrinkable film has a relatively low density and a relatively high transverse shrinkage while maintaining a relatively low haze. Furthermore, the heat-shrinkable film prepared according to Example 1 solves the problem of being too soft to meet actual requirements existing in the heat-shrinkable film prepared according to Example 7, and has a lower density than that of the heat-shrinkable film prepared according to Example 8.

From the comparison of Examples 1-4, it can be seen that the heat-shrinkable film prepared from the raw materials of the layer A, the raw materials of the layer B, and the raw materials of the layer C provided in the present invention, has a relatively low haze, a relatively low density and a relatively high transverse shrinkage, and is medium soft and hard, which meet the actual production requirements of heat-shrinkable films. The heat-shrinkable films prepared according to Examples 1-8 have a longitudinal shrinkage lower than 1% (tested according to ASTM D1204 at a test temperature of 95°C for 10 seconds), indicating a relatively low longitudinal shrinkage.

In conclusion, the heat-shrinkable film prepared according to the present invention not only has a density lower than 0.96 g/cm$^3$, but also has a relatively low haze and a relatively high transverse expansion ratio. Due to the relatively low density, it makes the separation of the heat-shrinkable film and containers having a density higher than water, such as PET bottles, easy. Furthermore, the prepared heat-shrinkable film has a relatively low haze, and a relatively high transverse shrinkage, and is medium soft and hart, which meet the actual production requirements for heat-shrinkable films.

**Claims**

1. A low-density heat-shrinkable film for labels, comprising a layer A, a layer B and a layer C, wherein the layer A is prepared by raw materials including a first opening agent, and at least one of a first polymer comprising a unit derived from a cyclic olefin and a first modified polystyrene, the layer B is prepared by raw materials including a second polymer comprising a unit derived from a cyclic olefin, a modified polypropylene, a polyethylene and a thickening agent, and the layer C is prepared by raw materials including a polyolefin, a second opening agent, and at least one of a third polymer comprising a unit derived from a cyclic olefin and a second modified polystyrene;

   the first polymer comprising a unit derived from a cyclic olefin, the second polymer comprising a unit derived from a cyclic olefin, and the third polymer comprising a unit derived from a cyclic olefin are each independently at least one selected from the group consisting of a cycloolefin copolymer (COC) and a cycloolefin polymer(COP);
   the first modified polystyrene and the second modified polystyrene are a styrene-butadiene block copolymer;
   the modified polypropylene is a compatibilizer grafted polypropylene;
   the polyethylene is at least one selected from the group consisting of a low density polyethylene (LDPE) and a linear low density polyethylene (LLDPE); and
   the polyolefin is at least one selected from the group consisting of a polyolefin elastomer (POE), a polyolefin plasticizer (POP), an ethylene-vinyl acetate copolymer (EVA) and an ethylene acrylic acid copolymer (EAA).

2. The low-density heat-shrinkable film for labels according to claim 1, wherein a thickness ratio of the layer A, the layer B, and the layer C is in a range of 5-20: 60-90: 5-20.

3. The low-density heat-shrinkable film for labels according to claim 1, wherein based on a total mass percentage of the raw materials of the layer B being 100%, the raw materials of the layer B includes 10-20% of the second polymer comprising a unit derived from a cyclic olefin, 60-80% of the modified polypropylene, 5-10% of the polyethylene and 5-10% of the thickening agent, by mass.

4. The low-density heat-shrinkable film for labels according to claim 1 or 3, wherein based on a total mass percentage of the raw materials of the layer A being 100%, the raw materials of the layer A includes 94-99% of the at least one of the first polymer comprising a unit derived from a cyclic olefin and the first modified polystyrene, and 1-6% of the first opening agent, by mass.

5. The low-density heat-shrinkable film for labels according to claim 1, wherein based on a total mass percentage of the raw materials of the layer C being 100%, the raw materials of the layer C includes 84-94% of the at least one of the third polymer comprising a unit derived from a cyclic olefin and the second modified polystyrene, 5-10% of the polyolefin, and 1-6% of the second opening agent, by mass.

6. The low-density heat-shrinkable film for labels according to claim 1, wherein the modified polypropylene is at least one selected from the group consisting of a maleic anhydride grafted polypropylene and a glycidyl methacrylate grafted polypropylene, and a polypropylene for preparing the modified polypropylene is at least one selected from the group consisting of a binary copolymer polypropylene and a ternary copolymer polypropylene.

7. The low-density heat-shrinkable film for labels according to claim 6, wherein the thickening agent is at least one selected from the group consisting of a C5 petroleum resin and a C9 petroleum resin.

8. The low-density heat-shrinkable film for labels according to claim 1, wherein the first opening agent and the second opening agent are each independently at least one selected from the group consisting of an organic opening agent and an inorganic opening agent,

the organic opening agent is at least one selected from the group consisting of oleamide, octadecanamide and erucamide, and

the inorganic opening agent is at least one selected from the group consisting of nano-silica, talcum powder and diatomaceous earth.

9. A method for preparing the low-density heat-shrinkable film for labels according to any one of claims 1 to 8, comprising the following steps:

(1) mixing the raw materials of the layer A including the first opening agent and the at least one of the first polymer comprising a unit derived from a cyclic olefin and the first modified polystyrene to obtain a mixed raw material of layer A,

(2) mixing the raw materials of the layer B including the second polymer comprising a unit derived from a cyclic olefin, the modified polypropylene, the polyethylene and the thickening agent to obtain a mixed raw material of layer B,

(3) mixing the raw materials of the layer C including the polyolefin, the second opening agent and the at least one of the third polymer comprising a unit derived from a cyclic olefin and the second modified polystyrene to obtain a mixed raw material of layer C,

(4) subjecting the mixed raw material of layer A, the mixed raw material of layer B, and the mixed raw material of layer C to melting separately, co-extruding and casting to obtain a cast film, wherein during the casting, the cast film is adhered to a cooling roll by an air knife, and

(5) sequentially subjecting the cast film obtained in step (4) to longitudinal stretching, transverse stretching and corona treatment to obtain the low-density heat-shrinkable film for labels.

10. The method according to claim 9, wherein the co-extruding in step (4) is performed by an extruder at a processing temperature of 200-250°C and a die temperature of 220-260°C.

11. The method according to claim 9, wherein in step (5), the longitudinal stretching is performed at a first preheating temperature of 100-150°C, a first stretching temperature of 80-120°C and a first stabilization temperature of 50-90°C, the transverse stretching is performed at a second preheating temperature of 120-170°C, a second stretching temperature of 80-120°C, and a second stabilization temperature of 50-90°C, and the corona treatment is performed at a power of 28-32 Wmin/m.

12. Use of the low-density heat-shrinkable film for labels according to any one of claims 1-8 as a packaging film.

Europäisches
Patentamt

European
Patent Office

Office européen
des brevets

## EUROPEAN SEARCH REPORT

**Application Number**

EP 24 21 1544

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/265635 A1 (TAGHLEEF IND INC [US]) 22 December 2022 (2022-12-22) * abstract; claims 1-28 * ----- | 1-12 | INV. B32B25/16 B32B27/08 B32B27/18 |
| A | WO 2022/114606 A1 (LOTTE CHEMICAL CORP [KR]; LOTTE ALUMINIUM CO LTD [KR]) 2 June 2022 (2022-06-02) * abstract; claims 1-7 * ----- | 1-12 | B32B27/20 B32B27/22 B32B27/30 B32B27/32 C08J5/18 C08L23/04 |

**TECHNICAL FIELDS SEARCHED (IPC)**

B32B
C08J
C08L

The present search report has been drawn up for all claims

| Place of search | Date of completion of the search | Examiner |
|---|---|---|
| The Hague | 11 March 2025 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1544

This annex lists the patent family members relating to the patent documents cited in  the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | Publication date |
|---|---|---|---|
| WO 2022265635 A1 | 22-12-2022 | NONE | |
| WO 2022114606 A1 | 02-06-2022 | EP    4253046 A1 | 04-10-2023 |
|  |  | KR 20220077168 A | 09-06-2022 |
|  |  | US   2024025162 A1 | 25-01-2024 |
|  |  | WO   2022114606 A1 | 02-06-2022 |

EPO FORM P0459

For more details about this annex : see Official Journal of the European Patent Office, No. 12/82